Europäisches Patentamt

European Patent Office

Office européen des brevets

(11) Veröffentlichungsnummer : **0 166 113**
**B1**

(12) # EUROPÄISCHE PATENTSCHRIFT

(45) Veröffentlichungstag der Patentschrift :
15.06.88

(51) Int. Cl.⁴ : **B 28 D   1/14**

(21) Anmeldenummer : 85105169.8

(22) Anmeldetag : 27.04.85

(54) **Bohrvorrichtung zur Herstellung von Bohrlöchern mit Hinterschneidung.**

(30) Priorität : 27.06.84 DE 3423633

(43) Veröffentlichungstag der Anmeldung :
02.01.86 Patentblatt 86/01

(45) Bekanntmachung des Hinweises auf die Patenterteilung : 15.06.88 Patentblatt 88/24

(84) Benannte Vertragsstaaten :
AT BE CH FR GB IT LI NL SE

(56) Entgegenhaltungen :
DE-A- 2 549 057
DE-A- 2 603 431
DE-A- 3 014 388
DE-A- 3 015 999

(73) Patentinhaber : **fischerwerke Artur Fischer GmbH & Co. KG**
**Weinhalde 14-18**
**D-7244 Tumlingen/Waldachtal 3 (DE)**

(72) Erfinder : **Fischer, Artur H.C., Dr.**
**Weinhalde 34**
**D-7244 Tumlingen/Waldachtal 3 (DE)**

(74) Vertreter : **Zimmermann, Ernst**
**C/o Artur Fischer Forschung Weinhalde 14 - 18**
**D-7244 Waldachtal 3 (Tumlingen) (DE)**

**Beschreibung**

Die Erfindung betrifft eine Bohrvorrichtung zur Herstellung von Bohrlöchern mit Hinterschneidung, bestehend aus einem Bohrer mit einem radial den Bohrschaft überragenden Seitenschneiden aufweisenden Bohrplättchen, einer mit einem Einspannschaft für eine Schlagbohrmaschine versehenen Bohreraufnahme mit einem kugelförmigen, radial überstehenden und mit längsverlaufenden Einschlitzungen versehenen Bund, der sich in einer Mulde einer über den Bohrschaft gestülpten und einen in das Bohrloch eingreifenden hülsenförmigen Zentrieransatz aufweisenden Anschlagplatte zur Bildung eines Schwenklagers abstützt.

Eine solche aus der DE-A-30 27 408 bekannte Bohrvorrichtung ermöglicht in einfacher Weise das Herstellen von Bohrungen mit einer Hinterschneidung in der Bohrlochtiefe durch Schwenken des Bohrers, wenn die gewünschte Bohrlochtiefe erreicht ist. Die Anschlagplatte nimmt dabei den beim Bohr- und Schwenkvorgang entstehenden Anpreßdruck auf. Der an der Anschlagplatte angeordnete hülsenförmige Zentrieransatz fixiert die Anschlagplatte während des Ausreibvorganges. Durch Bohrmehl kann eine Verklemmung des Zentrieransatzes im Bohrloch eintreten, die das Herausziehen des Bohrers aus dem fertiggestellten Bohrloch behindert. Bei der bekannten Bohrvorrichtung ist daher die mit der Anschlagplatte verbundene Bohrglocke mit einem Handgriff versehen, so daß durch Ziehen am Handgriff der an der Anschlagplatte angebrachte Zentrieransatz gelöst werden kann. Der als Rohrstutzen ausgebildete Handgriff dient gleichzeitig als Anschlußmöglichkeit der Bohrvorrichtung an ein Absauggerät.

Insbesondere in Deckenbohrungen kann in der Regel auf eine Absaugung verzichtet werden, so daß eine solche Bohrvorrichtung zu deren Vereinfachung auch ohne Handgriff ausgeführt sein kann.

Der Erfindung liegt die Aufgabe zugrunde, bei einer Bohrvorrichtung der eingangs erwähnten Art die Anschlagplatte mit dem Zentrieransatz an der Bohreraufnahme axial zu fixieren, so daß beim Herausziehen des Bohrers mit der Bohrmaschine die Anschlagplatte mitgeführt wird.

Erfindungsgemäß wird dies dadurch erreicht, daß die Anschlagplatte in Achsrichtung verlaufende, sich an die Mulde anschließende Stege aufweist, die hinter dem Bund der Bohreraufnahme eingebogen sind.

Die hinter dem Bund der Bohreraufnahme eingebogenen Stege der Anschlagplatte umfassen den Bund nunmehr in der Weise, daß beim Zurückziehen der Bohreraufnahme über den Bund die Anschlagplatte mitgeführt wird. Eine etwaige Verklemmung des Zentrieransatzes wird durch entsprechendes ruckartiges Ziehen an der Bohrmaschine gelöst.

In einer weiteren Ausgestaltung der Erfindung können die Stege in einem Abstand zueinander angeordnet sein und die Zwischenräume zwischen den Stegen mit den Einschlitzungen im Bund der Bohreraufnahme fluchten. Mit dieser Gestaltung wird sichergestellt, daß das von den Bohrmehlnuten des Bohrers durch den Zentrieransatz und den Einschlitzungen im Bund der Bohreraufnahme geförderte Bohrmehl aus den Zwischenräumen zwischen den Stegen abfließen kann.

In einer weiteren Ergänzung der Erfindung können die Stirnseiten der eingebogenen Stege den auf den gewünschten Ausformgrad der Hinterschneidung abgestimmten Schwenkwinkel der Bohreraufnahme begrenzen. Damit entsteht bei allen Bohrungen eine einheitliche Bohrlochgeometrie, auf die das einzusetzende Befestigungselement abgestimmt ist.

Die Aufgabe wird ferner dadurch gelöst, daß die Anschlagplatte einen in Achsrichtung verlaufenden, sich an die Mulde anschließenden Ansatz aufweist, an den ein hinter dem Bund der Bohreraufnahme einen Anschlag bildendes Schließteil befestigt ist. Das Schließteil bildet ebenfalls einen Anschlag, an dem der Bund der Bohreraufnahme beim Herausziehen des Bohrers aus dem Bohrloch anstößt. Auch mit dieser Lösung wird somit eine axiale Fixierung der Anschlagplatte an der Bohreraufnahme erreicht.

In weiterer Ausgestaltung dieser Lösung kann das Schließteil als napfförmige, auf den Ansatz aufschraubbare Hülse ausgebildet sein, deren Boden eine Ringvertiefung aufweist, in der Durchbrechungen angeordnet sind. Beim Bohren in der Decke sammelt sich das Bohrmehl in der im Boden des Schließteiles vorgesehenen Ringvertiefung und rieselt durch die in der Ringvertiefung angeordneten Durchbrechungen aus.

In weiterer Ergänzung kann zwischen der Hülsenbohrung des Schließteiles und der Außenfläche der Bohreraufnahme ein Ringspalt bestehen, der den auf den gewünschten Ausformgrad der Hinterschneidung abgestimmten Schwenkwinkel der Bohreraufnahme begrenzt.

Schließlich kann die Stirnseite der Anschlagplatte eine konvexe Wölbung aufweisen. Durch die konvexe Wölbung der Stirnseite der Anschlagplatte wird ein Verkanten des Zentrieransatzes bei nicht genau rechtwinklig verlaufendem Bohrloch vermieden. Da durch das Verkanten sowohl beim Bohren als auch beim Ausreiben der Hinterschneidung die Bohrtiefe verringert wird, ist durch die konvexe Wölbung der Stirnseite der Anschlagplatte ein genaueres Bohrlochtiefenmaß einhaltbar.

Schließlich kann in weiterer Ergänzung der Erfindung auf die Stirnseite der Anschlagplatte ein Dämpfungsteil aufgesetzt sein. Bei der Herstellung des Bohrloches in harten Baustoffen ist das Schlagwerk der Bohrmaschine eingeschaltet. Sobald die Anschlagplatte an der Mauerwerksaußenfläche zur Anlage kommt und kein Vorschub mehr erfolgt, schaltet sich zwar das Schlagwerk der Bohrmaschine aus, dennoch ist in dieser Phase nicht zu vermeiden, daß durch den Bund der Bohreraufnahme noch vereinzelt Schläge auf die Mulde der Anschlagplatte ausgeübt werden. Das Dämpfungsteil dient dazu, die Schlagwirkung auf das Anschlagteil abzumindern und somit die Standzeit dieses Teiles zu erhöhen.

In der Zeichnung sind Ausführungsbeispiele der Erfindung dargestellt.

Es zeigen :

Figur 1 eine Bohrvorrichtung, bei der die Anschlagplatte durch die hinter dem Bund der Bohreraufnahme eingebogenen Stege gehalten ist.

Figur 2 eine Bohrvorrichtung, bei der die Anschlagplatte durch ein Schließteil gehalten ist.

Figur 3 eine weitere Ansicht der Bohrvorrichtung nach Figur 2.

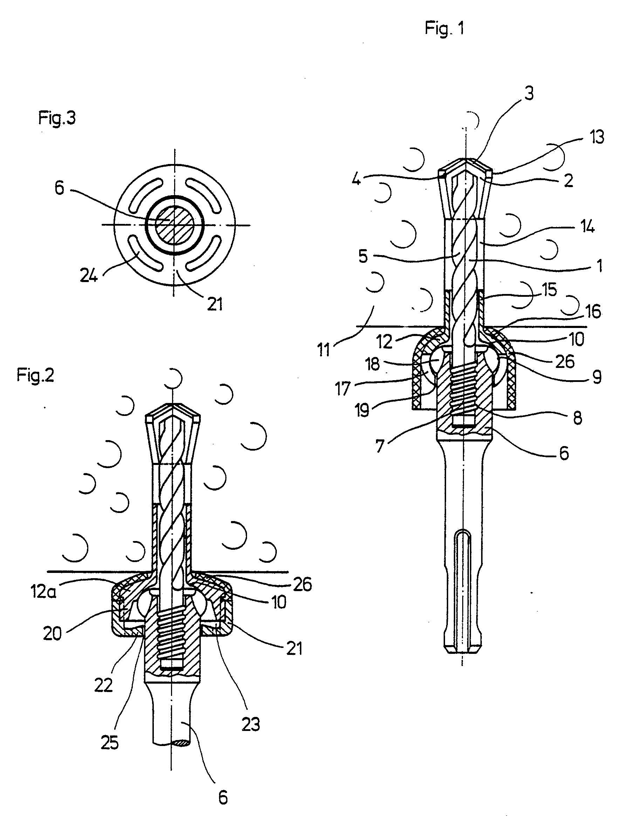

Die Bohrvorrichtung nach Figur 1 besteht aus dem Bohrschaft 1 und dem mit diesem verbundenen Bohrplättchen 2. Dieses weist neben der Stirnschneide 3 noch radial über den Bohrschaft hinausragende Seitenschneiden 4 auf. Zur Bohrmehlabfuhr ist der Bohrschaft 1 mit den Schaft schraubenlinienförmig umwindenden Nuten 5 versehen. Zur Verbindung des Bohrers mit der Bohreraufnahme 6 weist dieser ein Außen-Rundgewinde 7 auf, das in ein entsprechendes Innengewinde 8 der Bohreraufnahme 6 paßt. Die Länge des Bohrers bestimmt die Bohrlochtiefe, da der kugelförmige Bund 9 der Bohreraufnahme 6 als Anschlag dient. Dieser Bund 9 stützt sich in einer Mulde 10 der auf der Oberfläche des Mauerwerks 11 aufliegenden Anschlagplatte 12 ab. Dadurch ergibt sich ein Schwenklager, das es ermöglicht, den Bohrer während des Bohrvorganges auszuschwenken und durch Rühren die Hinterschneidung 13 des Bohrloches 14 auszubilden. Zur Zentrierung der Anschlagplatte 12 weist diese einen hülsenförmigen, in das Bohrloch 14 eingreifenden Zentrieransatz 15 auf. Die Stirnseite der Anschlagplatte 12 weist eine konvexe Wölbung 16 auf, so daß eine verkantfreie Anlage der Anschlagplatte an der Mauerwerksaußenfläche möglich ist. Durch Einbiegen der sich an die Mulde 10 der Anschlagplatte 12 anschließenden Stege 17 hinter dem radial abstehenden Bund 9 der Bohreraufnahme 6 ergibt sich eine axiale Fixierung der Anschlagplatte 12. Die Stege 17 sind in einem Abstand zueinander angeordnet und bilden Zwischenräume, die mit den Einschlitzungen 18 im Bund 9 der Bohreraufnahme 6 fluchten. Damit ist ein Abfluß des Bohrmehls möglich.

Zur Begrenzung des Schwenkwinkels der Bohreraufnahme weisen die Stirnseiten der eingebogenen Stege 17 zur Mantelfläche der Bohreraufnahme 6 einen entsprechenden Abstand 19 auf.

Bei der Bohrvorrichtung nach Figur 2 ist die Anschlagplatte 12a mit einem sich an die Mulde 10 anschließenden Ansatz 20 versehen, der ein Außengewinde aufweist. Auf diesen Ansatz 20 ist ein als napfförmige Hülse ausgebildetes Schließteil 21 in der Weise aufgeschraubt, daß der Boden 22 des Schließteiles 21 hinter dem Bund 9 der Bohreraufnahme 6 einen Anschlag bildet. Der Boden 22 des Schließteiles 21 weist eine Ringvertiefung 23 auf, in der mehrere Durchbrechungen 24 angeordnet sind. Bei Deckenbohrungen sammelt sich das Bohrmehl in der Ringvertiefung 23 und rieselt durch die Durchbrechungen 24. Zwischen der Hülsenbohrung des Schließteiles 21 und der Außenfläche der Bohreraufnahme 6 ist ein Ringspalt 25 vorgesehen, der den Schwenkwinkel der Bohreraufnahme begrenzt.

Auf die Stirnseite der Anschlagplatte 12, 12a ist ein aus Gummi bzw. weichem Kunststoff bestehendes Dämpfungsteil 26 aufgesetzt, das die Schlagwirkung beim Anschlagen der Anschlagplatte 12, 12a an der Mauerwerksoberfläche dämpft.

**Patentansprüche**

1. Bohrvorrichtung zur Herstellung von Bohrlöchern (14) mit Hinterschneidung (13), bestehend aus einem Bohrer mit einem radial den Bohrschaft (1) überragenden Seitenschneiden (4) aufweisenden Bohrplättchen (2), einer mit einem Einspannschaft für eine Schlagbohrmaschine versehenen Bohreraufnahme (6) mit einem kugelförmigen, radial überstehenden und mit längsverlaufenden Einschlitzungen versehenen Bund (9), der sich in einer Mulde (10) einer über den Bohrschaft (1) gestülpten und einen in das Bohrloch eingreifenden hülsenförmigen Zentrieransatz (15) aufweisenden Anschlagplatte (12) zur Bildung eines Schwenklagers abstützt, dadurch gekennzeichnet, daß die Anschlagplatte (12) in Achsrichtung verlaufende, sich an die Mulde (10) anschließende Stege (17) aufweist, die hinter dem Bund (9) der Bohreraufnahme (6) eingebogen sind.

2. Bohrvorrichtung nach Anspruch 1, dadurch gekennzeichnet, daß die Stege (17) in einem Abstand zueinander angeordnet sind und die Zwischenräume zwischen den Stegen (17) mit den Einschlitzungen im Bund (9) der Bohreraufnahme (6) fluchten.

3. Bohrvorrichtung nach Anspruch 1, dadurch gekennzeichnet, daß die Stirnseiten der eingebogenen Stege (17) den auf den gewünschten Ausformgrad der Hinterschneidung (13) abgestimmten Schwenkwinkel der Bohreraufnahme (1) begrenzen.

4. Bohrvorrichtung zur Herstellung von Bohrlöchern mit Hinterschneidung, bestehend aus einem Bohrer mit einem radial den Bohrschaft überragenden Seitenschneiden aufweisenden Bohrplättchen, einer mit einem Einspannschaft für eine Schlagbohrmaschine versehenen Bohreraufnahme (6) mit einem kugelförmigen, radial überstehenden und mit längsverlaufenden Einschlitzungen versehenen Bund, der sich in einer Mulde (10) einer über den Bohrschaft gestülpten und einen in das Bohrloch eingreifenden hülsenförmigen Zentrieransatz aufweisenden Anschlagplatte (12a) zur Bildung eines Schwenklagers abstützt, dadurch gekennzeichnet, daß die Anschlagplatte (12a) einen in Achsrichtung verlaufenden, sich an die Mulde (10) anschließenden Ansatz (20) aufweist, an den ein hinter dem Bund der Bohreraufnahme (6) einen Anschlag bildendes Schließteil (21) befestigt ist.

5. Bohrvorrichtung nach Anspruch 4, dadurch gekennzeichnet, daß das Schließteil als napfförmige, auf den Ansatz (20) aufschraubbare Hülse ausgebildet ist, deren Boden (22) eine Ringvertiefung (23) aufweist, in der Durchbrechungen (24) angeordnet sind.

6. Bohrvorrichtung nach Anspruch 4, dadurch gekennzeichnet, daß zwischen der Hülsenbohrung des Schließteiles (21) und der Außenfläche der Bohreraufnahme (6) ein Ringspalt besteht, der den auf den gewünschten Ausformgrad der Hinterschneidung abgestimmten Schwenkwinkel der Bohreraufnahme (6) begrenzt.

7. Bohrvorrichtung nach Anspruch 1 oder 4, dadurch gekennzeichnet, daß die Stirnseite der Anschlagplatte (12, 12a) eine konvexe Wölbung aufweist.

8. Bohrvorrichtung nach Anspruch 1 oder 4, dadurch gekennzeichnet, daß auf die Stirnseite der Anschlagplatte (12, 12a) ein Dämpfungsteil (26) aufgesetzt ist.

**Claims**

1. Drilling device for producing drilled holes (14) with an undercut (13), consisting of a drill bit with a drill tip (2) having a lateral cutting-edge (4) projecting radially beyond the drill shank (1), and of a drill bit holder (6) provided with a clamping shaft for an impact drilling machine and having a bulbous, radially projecting collar (9) provided with longitudinally extending slot openings, which collar, to form a swivel bearing, acts against a depression (10) of a stop plate (12) fitted over the drill shank (1) and having a sleeve-like centering extension (15) engaging in the drilled hole, characterized in that the stop plate (12) has axially extending members (17) adjoining the depression (10), which members are angled inwards behind the collar (9) of the drill bit holder (6).

2. Drilling device according to claim 1, characterized in that the members (17) are arranged spaced apart from one another and the gaps between the members (17) align with the slot openings in the collar (9) of the drill bit holder (6).

3. Drilling device according to claim 1, characterized in that the front faces of the angled-in members (17) limit the swivel angle of the drill bit holder (6) corresponding to the desired degree of shaping of the undercut (13).

4. Drilling device for producing drilled holes with an undercut, consisting of a drill bit with a drill tip having a lateral cutting-edge projecting radially beyond the drill shank, and of a drill bit holder provided with a clamping shaft for an impact drilling machine and having a bulbous, radially projecting collar provided with longitudinally extending slot openings, which collar, to form a swivel bearing, acts against a depression (10) of a stop plate (12a) fitted over the drill shank and having a sleeve-like centering extension (15) engaging in the drilled hole, characterized in that the stop plate (12a) has an axially extending extension (20) adjoining the depression (10) to which extension is fastened a closure member (21) forming a stop behind the collar of the drill bit holder (6).

5. Drilling device according to claim 4, characterized in that the closure member is formed as a cup-shaped sleeve capable of being screwed onto the extension (20), the floor (22) of which sleeve has an annular depression (23) in which are arranged apertures (24).

6. Drilling device according to claim 4, characterized in that between the sleeve bore of the closure member (21) and the outer surface of the drill bit holder (6) there is an annular gap which limits the swivel angle of the drill bit holder (6) corresponding to the desired shaping degree of the undercut.

7. Drilling device according to claim 1 or 4, characterized in that the front face of the stop plate (12, 12a) has a convex curvature.

8. Drilling device according to claim 1 or 4, characterized in that a buffer member (26) is provided on the front face of the stop plate (12, 12a).

**Revendications**

1. Dispositif de perçage pour le forage de trous (14) de perçage avec contre-dépouille (13), dispositif constitué par un foret comportant une plaquette (2) de perçage présentant un bord (4) de coupe dépassant radialement du fût (1) de foret, un organe (6) de fixation de foret muni d'un fût de fixation destiné à une perceuse à percussion, comportant un collet (9) de forme sphérique dépassant radialement et muni de fentes s'étendant longitudinalement, laquelle fixation s'appuie, pour former un palier de pivotement, dans une cuvette (10) d'une plaque (12) de butée enfilée sur le fût (1) de foret et présentant un embout (15) de centrage en forme de douille qui pénètre dans le trou de perçage, dispositif caractérisé en ce que la plaque (12) de butée présente des pattes (17) s'étendant dans le sens axial et prolongeant la cuvette (10) qui sont recourbées derrière le col (9) de l'organe (6) de fixation de foret.

2. Dispositif de perçage selon la revendication 1, caractérisé en ce que les pattes (17) sont disposées à une certaine distance les unes des autres et en ce que les espaces intermédiaires situés entre les pattes (7) sont alignés avec les fentes du collet (9) de l'organe (6) de fixation du foret.

3. Dispositif de perçage selon la revendication 1, caractérisé en ce que les faces avant des pattes (17) recourbées limitent l'angle de pivotement de l'organe (6) de fixation de foret, angle adapté au degré voulu de creusement souhaité pour la contre-dépouille (13).

4. Dispositif de perçage pour le forage de trous de perçage avec contre-dépouille, constitué par un foret comportant une plaquette de coupe présentant un bord de coupe latéral dépassant radialement du fût du foret, un organe (6) de fixation de foret muni d'un fût de fixation destiné à une perceuse à percussion, comportant un collet de forme sphérique, débordant radialement et muni de fentes s'étendant longitudinalement, qui s'appuie, pour former un palier de pivotement, dans une cuvette (10) d'une plaque (12a) de butée enfilée sur le fût du foret et présentant un embout de centrage en forme de douille pénétrant dans le trou de perçage, dispositif caractérisé en ce que la plaque (12a) de butée présente une partie saillante (20) s'étendant axialement et prolongeant la cuvette (10), à laquelle est fixée une pièce (21) de fermeture formant une butée derrière le collet de l'organe (6) de fixation de foret.

5. Dispositif de perçage selon la revendication 4, caractérisé en ce que la pièce de fermeture est constituée par une douille en forme de cuvette, vissable sur la partie (20) en saillie, dont le fond (22) présente une cavité annulaire (23) dans laquelle sont ménagés des passages (24).

6. Dispositif de perçage selon la revendication 4, caractérisé en ce qu'entre l'alésage de douille de la pièce (21) de fermeture et la surface extérieure de l'organe (6) de fixation de foret, se trouve une fente annulaire qui limite l'angle de pivotement de l'organe (6) de fixation de foret, angle adapté au degré de creusement souhaité pour la contre-dépouille.

7. Dispositif de perçage selon la revendication 1 ou 4, caractérisé en ce que la face avant de la plaque (12, 12a) de butée présente une courbure convexe.

8. Dispositif de perçage selon la revendication 1 ou 4, caractérisé en ce que, sur la face avant de la plaque (12, 12a) de butée est fixée une pièce (26) d'amortissement.

Fig. 1

Fig.3

Fig.2